(19) **Europäisches Patentamt / European Patent Office / Office européen des brevets**

(11) **EP 1 946 312 B1**

(12) **EUROPEAN PATENT SPECIFICATION**

(45) Date of publication and mention of the grant of the patent:
**16.09.2009 Bulletin 2009/38**

(21) Application number: **06821273.7**

(22) Date of filing: **01.11.2006**

(51) Int Cl.:
**G11B 7/006** (2006.01)

(86) International application number:
**PCT/IB2006/054036**

(87) International publication number:
**WO 2007/052221 (10.05.2007 Gazette 2007/19)**

(54) **METHOD OF ADJUSTING WRITING PARAMETERS, OPTICAL DISC WRITER AND METHOD OF RECORDING DATA USING THE SAME**

VERFAHREN ZUR EINSTELLUNG VON SCHREIBPARAMETERN, SCHREIBER FÜR OPTISCHE PLATTE UND VERFAHREN ZUR DATENAUFZEICHNUNG DAMIT

PROCEDE PERMETTANT D'AJUSTER LES PARAMETRES D'ECRITURE, GRAVEUR DE DISQUE OPTIQUE ET PROCEDE PERMETTANT D'ENREGISTRER DES DONNEES AU MOYEN DE CE DERNIER

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.11.2005 CN 200510120086**

(43) Date of publication of application:
**23.07.2008 Bulletin 2008/30**

(73) Proprietor: **Koninklijke Philips Electronics N.V.**
**5621 BA Eindhoven (NL)**

(72) Inventors:
• **TAO, Jing**
  **Shanghai 200070 (CN)**

• **ZHONG, Jianyi**
  **Shanghai 200070 (CN)**

(74) Representative: **Uittenbogaard, Frank Philips**
**Intellectual Property & Standards**
**P.O. Box 220**
**5600 AE Eindhoven (NL)**

(56) References cited:
**EP-A- 1 422 712**          **WO-A-99/30316**
**US-A- 5 848 045**          **US-A1- 2005 052 975**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to a method of optimizing writing strategy for re-writeable optical discs, and particularly to a method of optimizing writing strategy to adapt to the different direct over writing (DOW) histories and an optical disc writer and method of recording data on the optical discs using such method.

**BACKGROUND OF THE INVENTION**

At present, the optical system has become an ideal carrier for a mass of data owing to its relatively low cost and large capacity. The current optical discs include: CD (compact disc) using the EFM (Eight to Fourteen Modulation) encoding rule; DVD using the EFM+ encoding rule; BD (Blue-ray Disc) using the 17PP encoding rule and some other unpopular optical discs. Each of the above kinds of optical disc also could be classified into a read-only optical disc, a recordable optical disc or a re-writeable optical disc.

As for the re-writeable optical disc, data is represented by marks written by a recording laser and spaces between the marks. Since the marks and spaces have a different reflectance to the focused reading laser, high-frequency modulated signals are generated. Analog high-frequency signals are sent to a binary signal slicer after AC coupling and compared with the slice level to convert into a binary data; thus, a mark level and a space level corresponding to the marks and spaces on the optical disc respectively are obtained. Then, after being coupled to a clock signal, the runlength of each mark and space could be obtained so as to restore the recorded original data.

The restoration of the original data depends on the mark runlength and space run length obtained by slicing, but it is ultimately determined by the physical run length of the marks by writing. The physical length of spaces are decided by the physical lengths of the two marks adjacent thereto, so the accuracy of the written physical runlength of the marks decides the deviation amount of the read runlength of the marks and spaces, thereby deciding the quality of the writing of an optical disc.

The physical lengths of the marks and spaces are determined by the writing parameters. In order to write an optical disc accurately, many different writing strategies containing various writing parameters have been developed according to types of optical discs. Moreover, some methods which are adapted to optimizing the writing strategy dynamically during writing in different drivers are emerging. However, for re-writeable discs writing, there exists a famous DOW problem. DOW history is always random from region to region throughout a re-writeable disc. For example, DOW history is zero (virginal blank) in one region, but DOW history is 300 in another region. Generally, the physical properties of re-writeable media are different with different DOW histories. Thus, the optimized/calibrated writing strategy done in the optimum power control (OPC) area before writing is not really optimum for the data area with different DOW histories. Normally, this is called the "DOW compatibility" problem.

Current methods for optimizing the writing strategy dynamically do not work well for the DOW problem. For example, the Running-OPC method is only applicable to re-writeable (e.g. recordable) discs like DVD+R where only write power is calibrated according to Beta measurement. The Running-OPC method is based on real-time reflection signals from the disc during recording to overcome reflection variation and defects like a fingerprint, but it is not stable and increased power will deteriorate the DOW cycleability.

In the European patent application publication EP 1422712 A2 a recording/reproduction method is provided, which comprises the steps of generating a binary signal by converting a reproduction signal to a binary form, generating a synchronization signal using the binary signal, the synchronization signal being in synchronization with a clock signal, measuring a time interval between the binary signal and the synchronization signal and measuring an edge shift amount between the time interval and a clock time interval specified by the clock signal, and changing a parameter of a recording pulse based on the edge shift amount. The reproduction signal thereby may be reproduced from an user area in which data has been recorded. An embodiment disclosing the change of recording pulse parameters without changing the writing power level is presented.

In summary, the conventional methods for optimization the writing strategy have no capability of solving the DOW problem.

**OBJECT AND SUMMARY OF THE INVENTION**

It is an object of the invention to propose a method and apparatus for optimizing writing strategy to adapt to the different DOW histories during writing.

According to an embodiment of the present invention, a method of adjusting parameters for writing an optical disc comprises the steps of performing writing experiments in a previously written region of a re-writeable optical disc without changing writing power level, calculating writing parameters' gains in said written region, determining the modulation amount of each writing parameter with the desired mark runlengths, and adjusting the writing parameters based on the modulation amount.

According to another embodiment of the present invention, an optical disc writer comprises, a reading/writing device for performing writing experiments in a previously written region of a re-writeable optical disc without changing writing power level, a calculation device coupled to the reading/writing device for calculating writing parameters' gains in said written region and for determining the modulation amount of each writing parameter with the desired mark runlengths, and an adjustment device coupled to the reading/writing device for adjusting the writing parameters based on the modulation amount.

According to an illustrative example, a method of writing data on a re-writeable disc comprises the steps of writing data on the re-writeable disc; stopping to write data and determining signal quality of the written data; testing a region to be written in a re-writeable disc without changing writing power level; calculating writing parameters in the region to be written based on the tested result; adjusting writing parameters based on the calculated result; and continuing to write data on the re-writeable disc

The embodiments of the present invention resolve the DOW compatibility problem. Moreover, according to an embodiment of the present invention, power adjustment is kept unchanged so as to not deteriorate the DOW cycleability.

The other objects and achievements of the present invention will be apparent from the description of the present invention with reference to the following drawings and claims, to allow one to have a thorough understanding of the present invention.

## BRIEF DESCRIPTION OF THE DRAWINGS

Fig.1 is a schematic flowchart of a method of optimizing writing strategy adapted to different DOW histories according to an embodiment of the present invention,

Fig.2 is a schematic flowchart of a method of obtaining the modulation gains of the writing parameters according to an embodiment of the present invention,

Figs. 3, 4 and 5 are experiments and measurements made for determining the gains according to an embodiment of the present invention,

Fig.6 is a schematic block diagram illustrating an optical disc writer according to an embodiment of the present invention,

Figs. 7, 8 and 9 show the results of experiments under different conditions after optimization of the runlength deviation of 3T, 4T and 5T symbols, in which the optimizing target is the standard length of each mark as specified by the standard.

In the above drawings, the same reference symbol indicates the same, similar or corresponding characteristics or functions.

## DETAILED DESCRIPTION OF THE INVENTION.

The present invention is directed to providing a dynamic writing strategy optimization algorithm to solve the DOW compatibility problem during writing re-writeable discs without deteriorating the DOW cycleability.

The method of adjusting writing parameters of an embodiment of the present invention is described as follows. At first, a region to be written in a re-writeable disc is tested without changing writing power level, then the writing parameters in the region to be written based on the tested result is calculated. Finally, the writing parameters based on the calculated result are adjusted. Consequently, multiple writing parameters are adjusted simultaneously based on the calculated result, the DOW compatibility problem is resolved and the DOW cycleability is not deteriorated because the writing power level is kept unchanged. In addition, the total jitter is minimized.

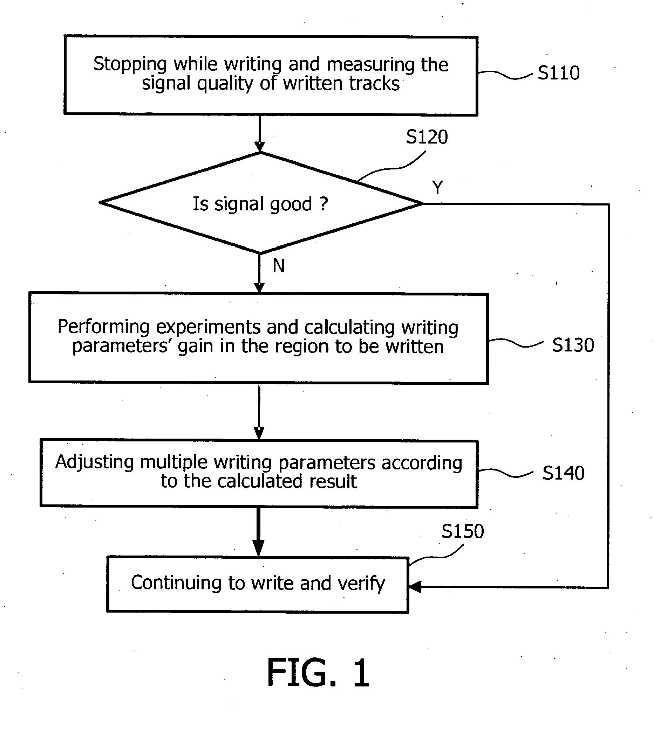

Fig.1 is a schematic flowchart illustrating a method of optimizing writing strategy adapted to different DOW histories according to an embodiment of the present invention. In step S110, the operations of writing data on a re-writeable disc are stopped. The optical disc writer does not write any more data on the disc until the optical disc writer is instructed to restart the writing operations. The quality of the signal written on the disc shortly before stopping is measured. For example, some parameters like jitter, which is the standard deviation of the timing difference between the sliced data edge and the clock edge; C1, which is the output of the first level (PI) of Error Correction Decoding, and C2, which is the output of the second level (PO) of Error Correction Decoding of the written tracks are measured to determine the quality of the signal. The exact explanations of the meaning of the above parameters may be referred to the standard books of relevant optical discs and are not explained in detail.

Next, in step S120, the optical disc writer determines whether the quality of the signal is good or not, according to defined criteria. There are many criteria that can be used for the above determination. Normally, a loose criterion may be set when the optical disc writer is recording AV (audio/video) data to a re-writeable disc and a tight criterion may be set when non-AV data are recorded. That is, the acceptable quality limit is decided by the system designer. For example, the criterion of jitter < 10%, C1 < 100 and C2 < 0 can be employed in this step.

If the quality of signal is good, the optical disc writer proceeds to step S 150. If the quality is poor and the writing parameters should be adjusted, the optical disc writer proceeds to step S130.

In step S 130, the optical disc writer does some experiments or tests on the current area to be written on the disc without changing the writing power level, in order to test the physical properties of the area, then to calculate optimum writing parameters gain in said region. Due to different DOW histories, the writing parameters for one region may not be appropriate for another region. The experiments or tests are carried out for each writing parameter.

In an embodiment of the present invention, the writing parameters are timing parameters. According to the results of the experiments or tests, the optimum writing parameters (such as modulation amount of each parameter) in the region to be written are calculated.

In an embodiment of the present invention, the writing parameters are calculated by a desired mark runlength variation and writing parameters' gain.

In another embodiment of the present invention, the writing parameters' of the experiments or tests (i.e. the results) reflect physical properties of the re-writable disc with different DOW histories.

The aim of optimizing writing strategy is to make the mark runlength of each symbol close to the desired mark runlength (e.g., the standard mark runlength specified by the optical disc standard). By standardizing the runlength of each mark, the space runlength will also be standardized so as to obtain smaller length jitter or position jitter of marks and spaces. Therefore, the target of mark runlength adjustment is normally zero for every symbol, thereby minimizing the total jitter. From this target, the desired mark runlength variation can be determined.

In step S 140, on the basis of the calculated result, the optical disc writer adjusts the multiple writing parameters simultaneously to accomplish the optimization of the writing strategy. Afterwards, step S140 also may include a step that re-performs the writing tests to determine whether the quality of the signal is acceptable. If the quality is still unacceptable, the above optimization steps may be repeated.

After optimization (steps S 130 and S 140), in step S 150, the optical disc writer continues writing data on the disc and then verifies the data as usual.

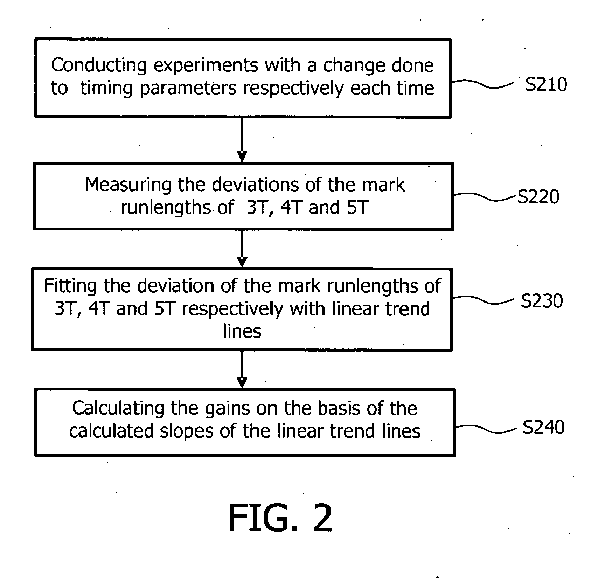

Referring to Fig.2, it illustrates a method of obtaining the gains (i.e. modulation amounts) of the writing parameters according to an embodiment of the present invention. In this embodiment, the gains K3, K4 and K5 will be calculated respectively to determine the change rates of the defined timing parameters for writing 3T, 4T and 5T symbols. With desired mark runlength variation, the changes of modulation amounts of the timing parameters can be produced as:

$$dT_M = d\,R_M\,/\,K_M\,;\,M = 3,\,4\text{ or }5;$$

wherein,

$dT_M$ is the modulation amount of the timing parameter,
$dR_M$ is desired mark runlength variation and $K_M$ is the gain.

As known, the physical runlengths of marks depend on either the power parameters or timing parameters. In this embodiment, the timing parameters are modulated and the power parameters are kept unchanged.

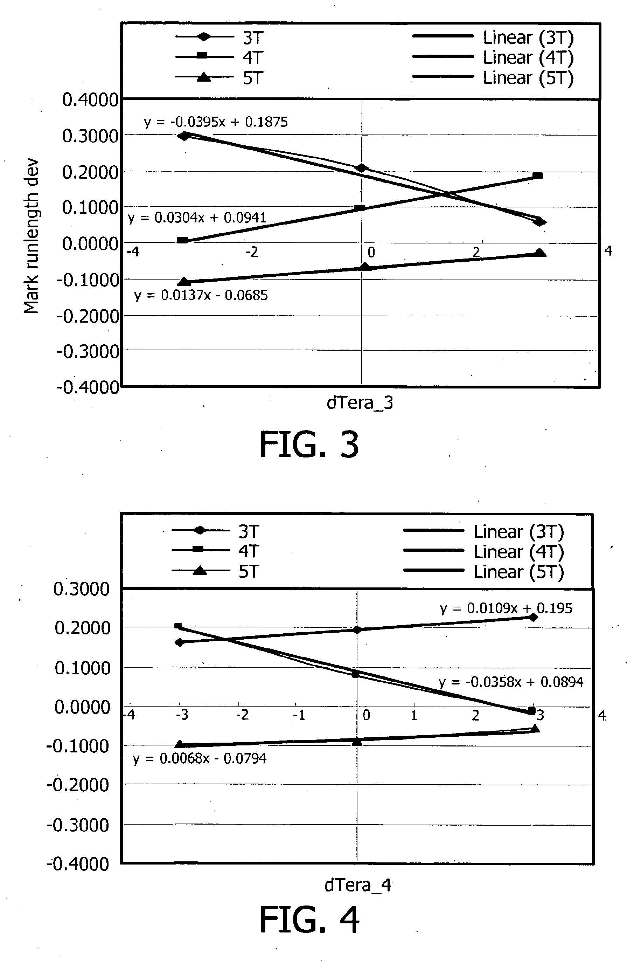

In Step S210, a series of writing experiments are conducted according to the present value of these timing parameters with a change made to these timing parameters respectively each time. And then, in step S220, the deviations of the runlengths of the 3T, 4T and 5T symbols are measured. Subsequently, in step S230, the obtained measured results (as shown in Figs. 3, 4 and 5) are fitted with their linear trend lines. In step S240, on the basis of the calculated slopes of the linear trend lines, the gains can be calculated as follows:

$$K3 = -0.0395 - (0.0304 + 0.0137)/2 = -0.0615$$

$$K4 = -0.0358-(0.0109+0.0068)/2 = -0.0447$$

$$K5 = -0.0231-(0.0068+0.0027)/2 = -0.0278$$

After obtaining the gains, the modulation amounts are determined. The writing parameters are then adjusted according to the modulation amounts so that the writing strategy is optimized by using the above method.

According to the above embodiment, the DOW compatibility problem is resolved and the DOW cycleability is not deteriorated because the writing power level is kept unchanged.

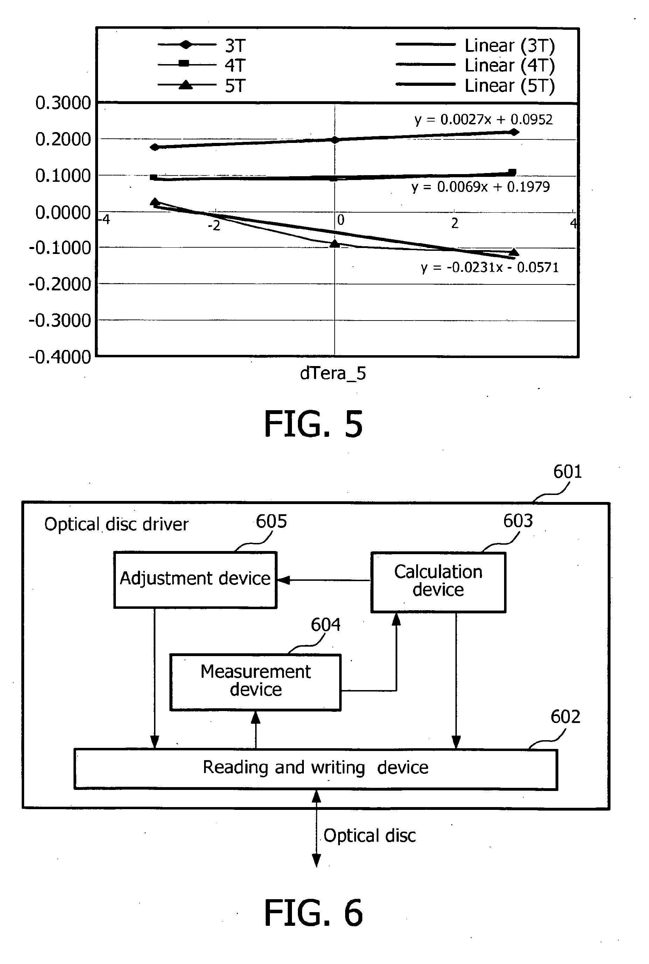

Fig.6 is a schematic block diagram illustrating an optical disc writer 601 according to an embodiment of the present invention. The optical disc writer 601 comprises a reading and writing device 602 for reading or writing data on an optical disc; a measurement device 604 coupled to the reading and writing device 602 for measuring and determining signal quality of a written region; a calculation device 603 coupled to the reading and writing device 602 and the measurement device 604 for calculating writing parameters in a region to be written based on tested result made in the region to be written without changing writing power level; and an adjustment device 605 coupled to the reading and writing device 602 for adjusting writing parameters based on the calculated result. At the beginning of the writing process, the measurement device 604 measures the quality of the signal just recorded, such as measuring the parameters jitter, C1 and C2, and transmits the results to the calculation device 603 to determine whether the quality of signal is good or not. If the quality is acceptable and the writing strategy does not need to be optimized, the optical disc writer 601 restarts the writing process to write data on the disc.

If the quality is not good, the calculation device 603 sends a series of instructions to the reading and writing device 602. According to the instructions, the reading and writing device 602 conducts a series of writing experiments without changing the writing power level. The measurement device 604 measures the runlengths of these marks written in the experiments and transmits the results to the calculation device 603. The calculation device 603 calculates the writing parameters' gains and determines the modulation amount of each writing parameter with the desired mark runlengths. And then, the calculation device 603 sends these modulation amounts to the adjustment device 605. The adjustment device 605 changes the writing parameters according to these modulation amounts and transmits the changed writing parameters to the reading and writing device 602 for use in the subsequent writing process.

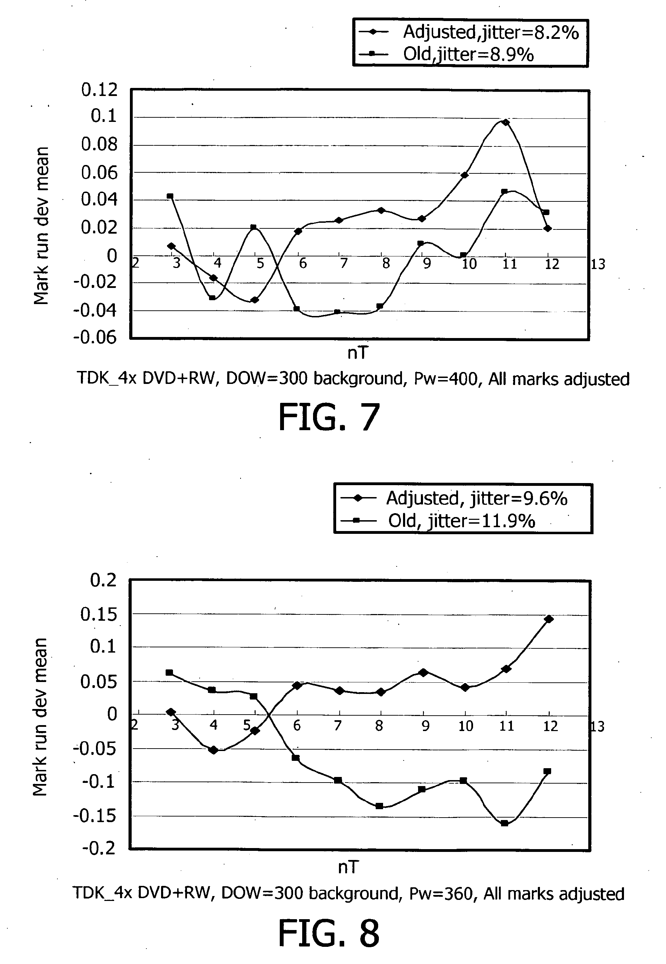

Fig.7 is a diagram shown the comparison of the adjusted mark runlength deviations with the original ones. This experiment, as an example, is carried out on a TDK_4xDVD+RW disc with a speed of 2.4x under the situations in which background DOW = 300 and Pw (write power) = 400 mW. From Fig.7, it can be seen that the jitter is changed from 8.9% to 8.2% after adjustment. The jitter decreases and the quality of writing is improved.

Fig.8 shows the result which is produced by the experiment of writing on a TDK_4xDVD+RW disc under the situation in which DOW = 300 and Pw (write power) = 360 mW. Here, a low write power is used (Pw = 360) to check the robustness of the method in accordance with the present invention, because a lower power is preferred for DOW cycleability and a low power will result in more writing noise then more challenge to signal measurement. From Fig.8, it can be seen that the jitter is changed from 11.9% to 9.6% after adjustment. The jitter decreases and the quality of writing is improved.

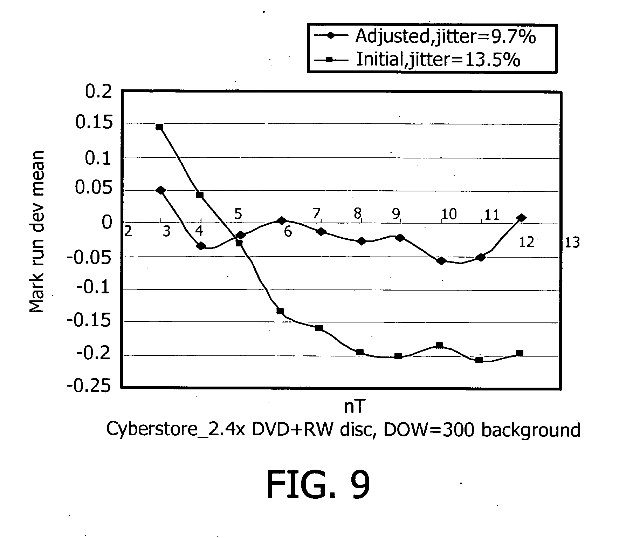

Fig.9 shows the result which is produced by the experiment of writing on another kind of disc, a Cyberstore_2.4xDVD+RW disc, under the situation in which DOW = 300 and Pw (write power) = 370 mW. From Fig.9, it can be seen that the jitter is changed from 13.5% to 9.7% after adjustment. The jitter decreases and the quality of writing is improved. This experiment further proves that the method according to the present invention has good robustness.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the scope of the technique approaches of the present invention, which will also fall into the protective scope of the claims of the present invention.

**Claims**

1. A method of adjusting parameters for writing an optical disc, said method comprising the steps of:

- performing writing experiments in a previously written region of a re-writeable optical disc without changing writing power level,

- calculating writing parameters' gains in said written region,
- determining the modulation amount of each writing parameter with the desired mark runlengths,
- adjusting the writing parameters based on the modulation amount.

2. An optical disc writer, comprising:

- a reading/writing device (602) for performing writing experiments in a previously written region of a re-writeable optical disc without changing writing power level,
- a calculation device (603) coupled to the reading/writing device (602) for calculating writing parameters' gains in said written region, and for determining the modulation amount of each writing parameter with the desired mark runlengths,
- an adjustment device (605) coupled to the reading/writing device (602) for adjusting the writing parameters based on the modulation amount.

**Patentansprüche**

1. Verfahren zum Einstellen von Parametern zum Beschreiben einer optischen Platte, wobei das genannte Verfahren die nachfolgenden Verfahrensschritte umfasst:

- das Durchführen von Schreibexperimenten in einem vorher beschriebenen Gebiet einer wieder beschreibbaren optischen Platte ohne Änderung des Schreibleistungspegels,
- das Berechnen der Verstärkungen der Schreibparameter in dem genannten beschriebenen Gebiet,
- das Ermitteln des Modulationsbetrags jedes Schreibparameters mit den gewünschten Markierungslauflängen,
- das Einstellen der Schreibparameter auf Basis des Modulationsbetrags.

2. Schreiber für optische Platten, der Folgendes umfasst;

- eine Auslese-/Schreibanordnung (602) zum Durchführen von Schreibexperimenten in einem vorhergehend beschriebenen Gebiet eines wieder beschreibbaren optischen Platte ohne Änderung des Schreibleistungspegels,
- eine Rechenanordnung (603), die mit der Auslese-/Schreibanordnung (602) gekoppelt ist, und zwar zum Berechnen der Verstärkung der Schreibparameter in dem genannten beschriebenen Gebiet, und zum ermitteln des Modulationsbetrags jedes Schreibparameters mit den gewünschten Markierungslauflängen,
- eine Einstellanordnung (605), die zum Einstellen der Schreibparameter auf Basis des Modulationsbetrags mit der Auslese-/Schreibanordnung (602) gekoppelt ist.

**Revendications**

1. Procédé d'ajustement de paramètres pour écrire un disque optique, ledit procédé comprenant les étapes suivantes consistant à :

- exécuter des expériences d'écriture dans une région précédemment écrite d'un disque optique réinscriptible sans ne changer le niveau de puissance d'écriture,
- calculer les gains des paramètres d'écriture dans ladite région écrite,
- déterminer la quantité de modulation de chaque paramètre d'écriture avec les plages de marque souhaitées,
- ajuster les paramètres d'écriture sur la base de la quantité de modulation.

2. Dispositif d'écriture de disque optique comprenant :

- un dispositif de lecture/écriture (602) pour exécuter des expériences d'écriture dans une région précédemment écrite d'un disque optique réinscriptible sans ne changer le niveau de puissance d'écriture,
- un dispositif de calcul (603) qui est couplé au dispositif de lecture /écriture (602) pour calculer les gains des paramètres d'écriture dans ladite région écrite et pour déterminer la quantité de modulation de chaque paramètre d'écriture avec les plages de marque souhaitées,
- un dispositif d'ajustement (605) qui est couplé au dispositif de lecture/écriture (602) pour ajuster les paramètres d'écriture sur la base de la quantité de modulation.

```
┌─────────────────────────────────────┐
│ Stopping while writing and measuring │  ⌇ S110
│   the signal quality of written tracks│
└─────────────────────────────────────┘
```

FIG. 1

Conducting experiments with a change done
to timing parameters respectively each time

S210

Measuring the deviations of the mark
runlengths of 3T, 4T and 5T

S220

Fitting the deviation of the mark runlengths of
3T, 4T and 5T respectively with linear trend
lines

S230

Calculating the gains on the basis of the
calculated slopes of the linear trend lines

S240

# FIG. 2

FIG. 3

FIG. 4

**FIG. 5**

**FIG. 6**

TDK_4x DVD+RW, DOW=300 background, Pw=400, All marks adjusted

# FIG. 7

TDK_4x DVD+RW, DOW=300 background, Pw=360, All marks adjusted

# FIG. 8

Cyberstore_2.4x DVD+RW disc, DOW=300 background

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1422712 A2